**Europäisches Patentamt**

**European Patent Office**

**Office européen des brevets**

(19)

(11) **EP 1 087 586 A2**

(12) # EUROPEAN PATENT APPLICATION

(43) Date of publication:
**28.03.2001 Bulletin 2001/13**

(51) Int Cl.$^7$: **H04L 27/26**

(21) Application number: **00308323.5**

(22) Date of filing: **22.09.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **24.09.1999 US 406070**

(71) Applicant: **PC-Tel, Inc.**
**San Jose, California 95134 (US)**

(72) Inventor: **Mirfakhraei, Khashayer**
**Fremont, California 94538 (US)**

(74) Representative: **Freeman, Jacqueline Carol**
**W.P. THOMPSON & CO.**
**Celcon House**
**289-293 High Holborn**
**London WC1V 7HU (GB)**

(54) **Bit loading process for multicarrier communications**

(57)     A process for determining bit loadings for a signal employing discrete multi-tone modulation includes: determining the noise in each sub-channel; determining target loadings that provide a desired error rate at the measured noise; rounding the target loadings to determine proposed loadings that are integers, and determining whether the proposed loadings provide a desired data rate. If the proposed loadings provide a data rate less than that desired, the process selects one or more sub-channels having a positive difference between target and proposed loading, and for each selected sub-channel increases the proposed loading by 1. The gains for the selected channels are increased to maintain the desired bit error rate at the higher loading. If the proposed loadings provide a data rate greater than that desired, the process selects one or more sub-channels having a negative difference between target and proposed loading, and for each selected sub-channel decreases the proposed loading by 1. The gains of the channels having decrease loadings are decrease to improve power efficiency.

**EP 1 087 586 A2**

**Description**

BACKGROUND

Field of the Invention

This invention relates to communications and communications systems such as modems and transceivers that use multiple carrier frequencies for information transmissions.

Description of Related Art

A typical modem currently transmits data using a communication signal having a single carrier frequency. To transmit data, a sending modem modulates the phase and/or amplitude of a communication signal in a manner dictated by a protocol established for the communication signal. A receiving modem receives and demodulates the communication signal, which approximately has the carrier frequency, and identifies the transmitted data from the modulation of the received signal. With such modems, the carrier frequency and the bandwidth of the communication signal limit the maximum data transmission rate. Generally, a higher frequency carrier signal permits a higher data transmission rate, but high frequencies are difficult to accurately transmit using systems such as conventional telephone lines. Similarly, conventional phone lines have frequency dependent attenuation, which distorts communication signals having large bandwidths. Accordingly, the maximum data rate of a conventional modem architecture is limited.

Discrete Multi-Tone (DMT) protocols have been developed to increase the data transmission rate over conventional telephone lines. Examples of DMT protocols include the Asymmetric Subscriber Loop (ADSL or G.992.1), the High bit rate Digital Subscriber Loop (HDSL), the Very fast asymmetric Digital Subscriber Loop (VDSL), and light rate ADSL ( G.992.2), which have been proposed by or are standards of groups including the ITU, ANSI, and ETSI. A DMT protocol simultaneously uses multiple carrier frequencies where each carrier frequency corresponds to a sub-channel. Each signal for a sub-channel has relatively narrow bandwidths (e.g., 4 kHz) to reduce distortion within the sub-channel signal. For data transmission, a sending modem breaks transmitted data into packets for simultaneous transmission on separate sub-channels and independently modulates communication signals for the sub-channels according to the data carried on each sub-channel. The receiving modem separates sub-channel signals according to carrier frequency, demodulates the separate sub-channel signals, and reassembles the data.

A concern for DMT protocols is differences between the separate channels. Specifically, sub-channels having low carrier frequencies may perform differently from sub-channels having high carrier frequencies. Accordingly, some sub-channels may be able to accurately carry more data than others. Many DMT protocols employ a conventional quadrature amplitude modulation (QAM) for modulating data transmitted on each sub-channel. Such QAM uses a constellation map defined by a two-dimensional symbol set. The size of the symbol set determines the number of data bits per symbol and the bit rate for transmission on the sub-channel. A large symbol set provides a high data rate for transmissions on the sub-channel but also decreases the separation between symbols in the constellation map, making it more difficult for a receiver distinguish and identify individual symbols. For efficient operation of DMT communications, the capability of each sub-channel needs to be determined to enable selection of optimal symbol sets for each sub-channel. However, the differences between sub-channels may be difficult to characterize and may vary from one communication connection to the next.

SUMMARY

In accordance with the invention, a process for determining a bit loading for a discrete multi-tone (DMT) communication signal may include any combination of the steps: determining the noise in each sub-channel of ther DMT signal; determining target loadings that provide a desired error rate at the measures noise; rounding the target loadings to determine proposed loadings that are integers, and determining whether the proposed loadings provide a desired data rate. If the proposed loadings provide a data rate less than that desired, the process can select one or more sub-channels having a negative difference between target and proposed loading, and for each selected sub-channel decreases the proposed loading by 1. The gains of the channels having decrease loadings are decrease to improve power efficiency.

As part of the DMT initialization, a local modem or transceiver communicates to a remote modem or transceiver bit loadings determined using processes in accordance the invention. This initialization ensures that the receiver in the local modem can properly equalize, slice, and assign the appropriate bits to each symbol from each sub-channel. For determination of bit loadings, the remote modem sends a predetermined pseudo random periodic signal through the channel. Since the local modem has apriori knowledge of this signal, the local modem can estimate the signal attenuation and the present signal-to-noise ratio (SNR) for each sub-channel. Based on the SNR, and considering the power budget for signal transmission, the degree of noise immunity, and the required data rate for the connection, the local modem can estimate the capacity or the target loading of each sub-channel. However, the estimated capacity is almost always a non-integer, and one constraint in some DMT systems or protocols is that the bit loadings must be integers. Normally, all sub-channels regardless of their capacity have equal transmit power, however, to accommodate for integer bit loadings, most DMT systems allow power variance among different sub-channels. In most DMT protocols, the variance or gain can be within 2.5 dB of the normal or specified transmit power. By varying the transmit power of each sub-channel, one can manipulate the SNR to obtain integer loadings that perform within the allowed bit error rate. Once the bit loadings and gains for the sub-channels are determined, the local modem communicates (dictates) the bit loadings and gains to the remote modem, so that the remote modem can adopt the dictated DMT format for data transmission to the local modem.

In accordance with one embodiment of the invention, a process for determining bit loadings for sub-channels of a communication signal, includes: measuring noise in the communication signal; determining target loadings for each sub-channel, wherein the target loading for a sub-channel provides an error probability equal to a target level when the noise is as measure; rounding the target loadings to generate proposed loadings for the sub-channels, wherein each proposed loading is an integer; determining, for each sub-channel, a differences between the target and proposed loadings for the sub-channel; selecting a sub-channel according to the difference for the selected sub-channel; and changing the proposed loading for the selected sub-channel by 1 to arrive at the bit loading for the selected sub-channel. This process can be used to increase the total data rate by i increasing the propose loading of one or more sub-channel having a positive different between its target and proposed loadings. Alternatively, the process can improve power efficiency by decreasing the loading and the gain for sub-channels having a negative different between target and proposed loadings.

In accordance with another embodiment of the invention, a process for determining bit loadings for sub-channels of a communication signal, includes: measuring noise in the communication signal; using the measured noise in determining proposed loadings of the sub-channels from the measured noise in the sub-channels, wherein each proposed loading indicates an integer number of bits per symbol transmitted on a sub-channel; setting gains for the sub-channels according to the proposed loadings and the measured noise; determining whether the proposed loadings provide a desired data rate for the communication signal; increasing the proposed loadings for one or more selected sub-channels in response to the proposed loadings failing to provide the desired data rate; and increasing gains for the selected sub-channels to reduces probability of error with the increase loading and the measured noise.

Other embodiments of the invention include xDSL transceiver implementing any of the process disclosed herein.

BRIEF DESCRIPTION OF THE DRAWINGS

Fig. 1 is a block diagram of an xDSL transceiver in accordance with an embodiment of the invention.
Fig. 2 is a flow diagram of a bit loading process in accordance with an embodiment of the invention.
Fig. 3 is a flow diagram of a process for refining the bit loading found in the process of Fig. 2.
Use of the same reference symbols in different figures indicates similar or identical items.

DETAILED DESCRIPTION OF THE PREFERRED EMBODIMENTS

In accordance with an aspect of the invention, a modem or transceiver that implements a DMT protocol (herein after an xDSL transceiver) employs a "bit-loading" process that characterizes the capabilities of sub-channels and determines the number of bits-per-symbol transmitted over the channel. The gains of the sub-channels are adjusted to achieve a desired data rate with acceptable signal-to-noise ratios and bit error rates in each channel.

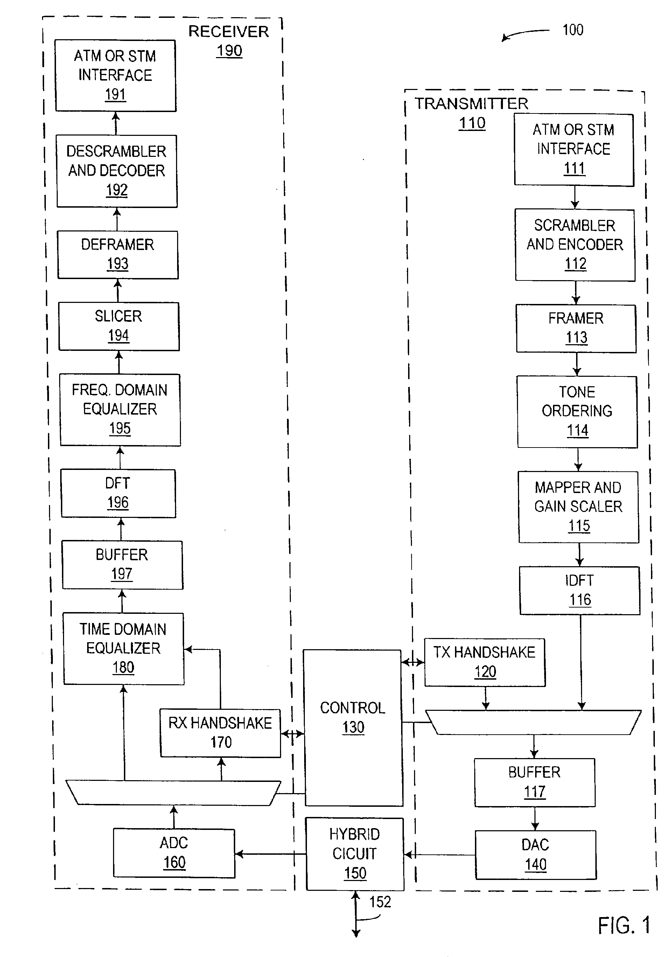

Fig. 1 is the general block diagram of a client side (atu-r) ADSL transceiver 100 including a transmitter 110 and a receiver 190, that connect to a conventional telephone line via a hybrid circuit 150. ADSL protocols are asymmetric and have more sub-channels and a higher data rate for downstream communication to receiver 190 and fewer sub-channels for up stream communications from transmitter 110. Thus, upstream and downstream transceivers are different from each other, but both the upstream and the downstream transceivers have elements or functional blocks performing the functions of the blocks illustrated in Fig. 1. Transceiver 100 can be implemented with dedicated hardware as in conventional xDSL transceivers and modems. Alternatively, transceiver 100 can be a host signal processing transceiver where a hybrid circuit 150 and a codec including a digital-to-analog converter (DAC) 140 and an analog-to-digital converter (ADC) 160 are dedicated communication hardware, and the other blocks of transceiver 100 are software that a host computer executes. Yet another alternative is a hybrid hardware/software transceiver such as described in co-owned U.S. Pat. App. Ser. No. 09/263,160, entitled "Hybrid Software/Hardware Discrete Multi-Tone Transceiver," which was filed March 5, 1999 and is hereby incorporated by reference in its entirety.

Transmitter 110 of transceiver 100 includes an asynchronous transfer mode (ATM) or synchronous transfer mode (STM) interface 111 through which transceiver 100 receives data to be transmitted to a remote transceiver (not shown). Typically, interface 111 is implemented in hardware or software of a host computer (not shown), and the data may be from an application that the host computer executes or from a terminal in a local network connected to the host computer.

A scrambler and encoder 112 performs initial encoding of the data. The encoding is in accordance with a protocol that transceiver 100 implements. For example, encoder 112 may interleave the data and append cyclic redundancy codes or error detection and correction codes to the data. A framer 113 breaks the encoded data stream from encoder 112 into bit sets. Each bit set is assigned to a sub-channel for transmission and corresponds to a symbol to be transmitted on the assigned sub-channel. Each bit set contains a number of bits that depends on constellation for the assigned sub-channel or equivalently on the bit loading for the assigned sub-channel. Herein, a loading $b(i)$ is the number of bits per symbol transmitted on a sub-channel corresponding to an index i. A tone ordering block 114 orders the bit sets by sub-channel for a constellation mapper 115.

For each bit set, constellation mapper 115 determines a QAM symbol associated with the bit set for the quadrature amplitude modulation (QAM) of the assigned sub-channel. Constellation mapper 115 also scales each determined QAM symbol according to a gain $g(i)$ allocated to the sub-channel assigned to carry the QAM symbol. A DMT symbol includes one QAM symbol per sub-channel. The number of bits per DMT signal is the total loading Btot for the channel and is equal to the sum of the loadings $b(i)$ for the sub-channels used for transmission of data. The data rate for transmission is the product of total loading Btot and the transmission rate for DMT symbols. Accordingly, since current xDSL protocols have constant symbol rates, the data rate for an xDSL transceiver is proportional to total loading Btot.

An IDFT block 116 receives the scaled QAM symbols that constitute a DMT symbol and performs inverse Fourier transforms on DMT symbols to convert the DMT symbol into a sequence of time domain samples. The sequence of samples from an inverse Fourier transform of a DMT symbol defines the transmitted signal for a symbol period. IDFT block 116 repeats the inverse Fourier transforms at a rate equal to the symbol rate to maintain a constant stream of time domain samples. A buffer 117 receives the time domain samples and sequentially provides samples to DAC 140 at the rate required for conversion to an analog communication signal. Hybrid circuit 150 transmits the analog signal from DAC 140 to telephone lines 152 coupled to hybrid circuit 150.

Transmitter 110 also includes a TX handshake block 120 which generates time domain samples for a handshake signal sent to a remote transceiver when establishing a connection or during retaining. Typically, the handshake signal includes a pattern that the remote transceiver requests or indicates a pattern for the remote transceiver to transmit to receiver 190. A control block 130 interprets a received signal from the remote transceiver to determine whether TX handshake block 120 or IDFT 116 provides the samples that define the transmitted signal.

Hybrid circuit 150 directs a received analog communication signal from telephone lines 152 to receiver 190. An analog-to-digital converter (ADC) 160 samples the analog signal and passes digitized samples to an RX handshake block 170 during a connection sequence and to a time domain equalizer (TEQ) 180 once a connection is established. TEQ 180 is an adaptable digital filter that transceiver 100 trains when connecting with the remote transceiver. For the training, the remote transceiver transmits a probing signal to the transceiver 100, and RX handshake block 170 receives digital samples from ADC 160. Block 170 determines the coefficients or taps of TEQ 180.

Handshake block 170 also estimates the signal-to-noise ratio $SNR(i)$ for each sub-channel index i. The estimated signal to noise ratios $SNR(i)$ can be determined, for example, by directing the remote transceiver to transmit a known pseudo-random signal and then comparing the received signal to the known signal. Fluctuations in the difference can be attributed to noise. Handshake block 170 can determine the noise ratios $SNR(I)$ from the output of TEQ 180 after training TEQ 180

Based on the estimated ratios $SNR(i)$, Rx handshake block 170 determines a bit loading $b(i)$ and a scaling $g(i)$ for each sub-channel i, and control 130 directs transmitter 110 to inform the remote transceiver of the determined loadings $b(i)$ and scaling $g(i)$. In the remote transceiver, a framer similar to framer 113 uses the loadings $b(i)$ for selection of bit sets for each sub-channel carrying data to transceiver 110. A mapper and scaler similar to mapper and scaler 115 uses constellations selected according to the loadings $b(i)$ and uses gains $g(i)$ to scale the QAM symbols selected from the constellations.

After establishment of a connection, TEQ 180 filters incoming samples to shorten the impulse response of the channel and reduce distortion across the broadband signal. TEQ 180 stores filtered samples in a buffer 197. A discrete Fourier transform (DFT) block 196 performs a discrete Fourier transform on the filtered time-domain samples associated with a DMT symbol to determine frequency components associated with the sub-channels. A frequency domain equalizer 195 then filters the frequency components to further reduce channel distortion. A slicer 194 scales the individual components according to the gains $g(i)$ that the remote transceiver used to adjust the relative powers in the sub-channels. [The (near end) modem 100 determines gains according to the outcome of the channel probing and transmits the results (as a bits and gains table) to the remote modem for use when transmitting to the near end modem 100. Slicer 194 of the near end modem 100 uses the same gains to scale the signals back to the pre-gain levels Slicer 194 then identifies QAM symbols from the constellation maps corresponding to loadings b(i) of the sub-channels. A deframer converts the QAM symbols into a bit stream which a descrambler and decoder 192 converts to the final data. An ATM or STM interface 191 directs the data to the appropriate receiving device or application.

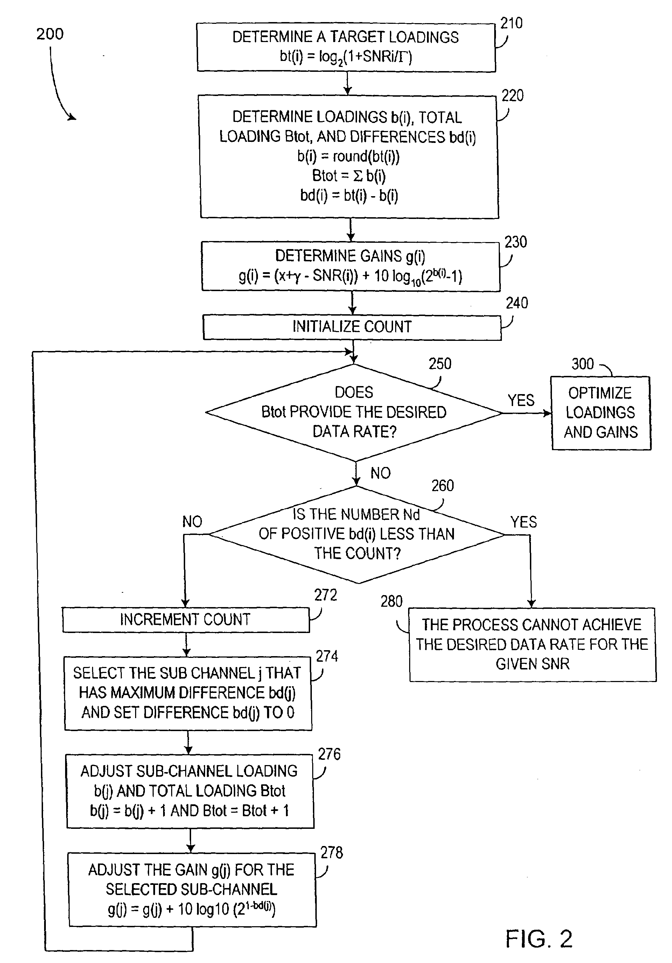

In accordance with the invention, RX handshake block 170 implements a bit loading process that determines bit loadings b(i) and gains g(i) that achieve a desired or maximum data rate. Fig. 2 illustrates a bit loading process 200 in accordance with an embodiment of the invention. Prior to bit loading process 200, handshake block 170 determines an estimate SNR(i) of the signal-to-noise ratio in each sub-channel i. The estimates SNR(i) can be determined using any desired method. In particular, block 170 can compare a received signal to known values that were transmitted and determine estimates SNR(i) from that comparison.

Process 200 determines the appropriate loadings b(i) and gains g(i) for each sub-channel i, based on estimates SNR(i), transmission power constraints, noise immunity constraints, and a desired data rate. In an initial step 210, process 200 determines target loadings bt(i) using the relation of Equation 1.

$$\text{Equation 1: } bt(i) = \log_2(1 + SNR(i)/\Gamma)$$

for i=1:N where N is the maximum number of sub-channels for data received at the local modem. In Equation 1, parameter $\Gamma$ is called the 'SNR gap' and is the sum of three terms, $\chi$, $\gamma m$, $\gamma c$ as indicated in Equation 2.

$$\text{Equation 2: } \Gamma = \chi + \gamma m + \gamma c$$

Term $\gamma m$ is the noise immunity margin. Term $\gamma c$ is the adjustment in SNR for any coding gain, and term $\chi$ depends on the Bit Error Rate (BER) requirements of a connection. J. C. Cioffi, "A Multi-Carrier Primer". ANSI T1E1.4/97-157, Boca Raton, FL, pp. 91-157, Nov. 91 describes the full derivation of the above equations and is hereby incorporated by reference in its entirety. For a typical DSL connection with a bit error rate (BER) of less than about $10^{-7}$, term $\chi$ is about 9.8, term $\gamma m$ is 0-6 dB, and term $\gamma c$ is 0-3 dB.

Assuming that the channel is fully equalized and that only Gaussian white noise is present in the system, Equation 3 gives the approximate probability Pe of a two-dimensional symbol error in QAM.

$$\text{Equation 3: } Pe \Leftarrow 4Q(dmin/2\sigma) \tag{1}$$

In Equation 3, dmin is minimum distance between adjacent constellation points, $\sigma$ is the power of the noise, and Q $(dmin/2\sigma)$ is given in Equation 4.

$$\text{Equation 4: } Q(x) = \frac{1}{\sqrt{2\pi}} \int_0^x e^{\frac{-u^2}{2}} \, du$$

For a typical DSL connection, the error probability Pe is about $2*10^{-7}$. Substituting error probability Pe value in Equation 3 permits solving for the value for $(dmin/2\sigma)^2$, which is in turn equal to $3\Gamma$. Using the determined value for SNR gap $\Gamma$ in Equation 1 determines target bit loadings bt(i).

The target bit loadings bt(i) indicate the sub-channel capacities for the required bit error rate BER and the measured signal-to-noise ratios SNR(i) for gains g(i). Target loadings bt(i) determined from Equation 1 in step 210 are typically non-integer values. However, common ADSL protocols require that the bit loadings b(i) be integers. Accordingly, for a first estimate of bit loadings, step 220 rounds target loadings bt(i) to integer values b(i) as in Equation 5.

$$\text{Equation 5: } b(i) = \text{round}(bt(i))$$

Step 220 also determines the total loading Btot using Equation 6, differences bd(i) from Equation 7, and the number Nd of differences bd(i) that are greater than zero.

$$\text{Equation 6: Btot} = \Sigma\ b(i)$$

$$\text{Equation 7: bd(i)= bt(i) - b(i)}$$

Step 230 adjusts gains g(i) according to Equation 8.

$$\text{Equation 8: } g(i) = (\Gamma\text{-SNR}) + 10 \log_{10} (1\text{-}2^{b(i)})$$

Equation 2 defines $\Gamma$ for Equation 8. Typically, steps 210, 220, and 220 are completed using a loop with a loop index i ranging over the number of sub-channels. Each pass through the loop determines a bit loading b(i) and a gain g(i) for a sub-channel i.

If the product of total loading Btot and the DMT symbol rate provides a data transmission rate greater than or equal to the desired data rate, the first estimates of loadings b(i) are acceptable for use. Step 250 determines whether the current loadings b(i) achieve the desired data rate. If so, process 200 transfers from step 250 to an optimization process 300. Process 300 optionally adjusts the loadings b(i) to optimize bandwidth utilization or transmission power efficiency. Optimization processes are described further below. If total loading Btot does not provide the desired data transmission rate, bit loading process 200 transfers from step 250 to step 260 to determine whether adjusting loadings b(i) and gains g(i) can achieve the desired data rate.

Step 260 determines whether any differences bd(i) are positive and correspond to loadings b(i) that process 200 has not adjusted. More specifically, a count, which a step 240 initializes the count to zero, indicates the number of adjustments that process 200 has made to loadings b(i). When the count is greater than or equal to number Nd of positive differences bd(i), there are no loadings b(i) available for further adjustment. If there are no positive differences or if all loadings b(i) having positive differences bd(i) have been adjusted, then for the given SNR margins, process 200 has cannot achieve the desired data rate, and process ends in step 280.

If there are loadings remaining to be adjusted, an adjustment process including steps 272, 274, 276, and 278 begins. Step 272 increments the count of adjustments made. Step 274 then identifies the greatest difference bd(j) and selects a sub-channel j corresponding to the greatest difference. The selected sub-channel j has a loading b(j) that step 276 increases by one. As a result, the total loading Btot increases by one. Selection of sub-channel j for further adjustment is disabled, for example, by setting difference bd(j) to zero or a negative value, without changing number Nd. Since sub-channel j had the largest difference between the determined capacity bt(i) and the first proposed loading b(i), the increased loading b(i)+1 provides the smallest error probability. However, to further decrease the error probability for sub-channel j and increase the signal-to-noise ratio of sub-channel j to comply with the requirements of the communication system (i.e., BER=10e-7, noise margin=6db), step 278 adjusts gain g(j) as indicated in Equation 9, where gain g(j) is in dB.

$$\text{Equation 9: } g(j) = g(j) + 10 \log_{10} (2^{1\text{-}bd(j)})$$

Increasing the signal strength for a sub-channel reduces the signal-to-noise ratio for the sub-channel and allows the incremented bit loading without unacceptably increasing the error probability. Further, process 200 only increases gain g(j) and bit loading b(j) for subchannels j having positive differences, i.e., the target loading bt(j) was rounded down. Accordingly, the rounding difference accommodates at least some of the increase in bit loading b(j) without raising the errors beyond the desired bit error rate.

After adjusting the loadings to increase total Btot, process 200 moves from step 278 back to step 250 and determines whether the new total loading achieves the desired data rate. If the desired data rate has been achieved, process 200 branches to process 300 and can optionally optimize loadings b(i) or gains g(i) for bandwidth utilization or transmission power efficiency. In the desired data rate has not been achieved, process 200 branches from step 250 to step 260 to determine whether further adjustments are possible to further increase the data rate. After zero, one, or several adjustments of loadings b(i) and gains g(i), process 200 ends with an optimization process 300 after the desired data rate was achieved or in step 280 after failing to achieve the desired data rate.

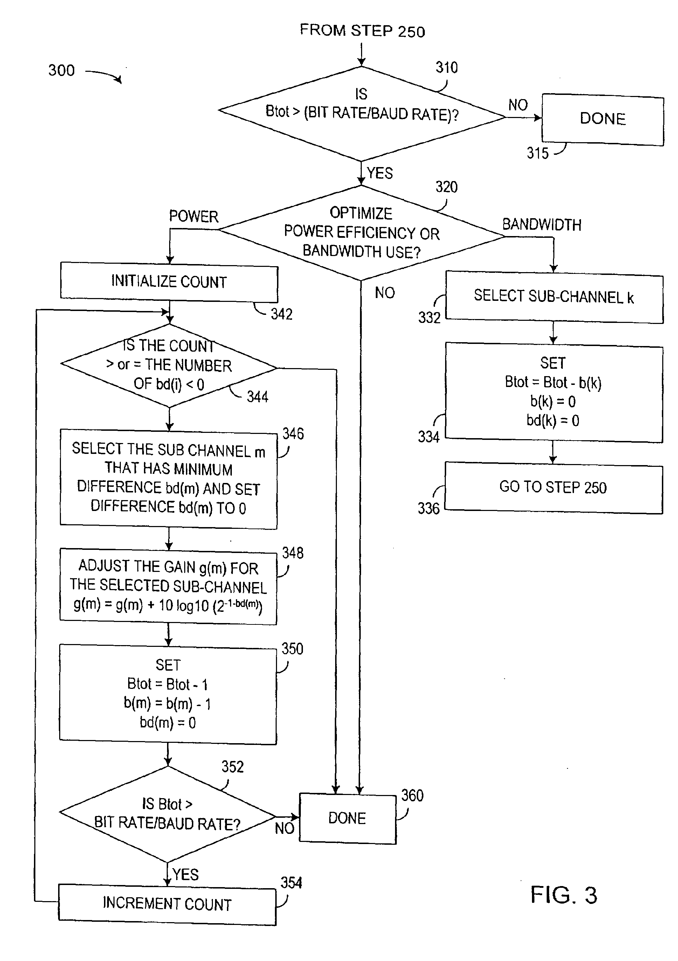

Process 300 can optimize the bit loading found in process 200, for example, according to bandwidth utilization or power efficiency if total bit loading Btot is larger than loading needed to achieve the desired bit rate. Fig. 3 illustrates an embodiment of optimization process 300. In process 300, a decision step 310 determines whether the total loading is greater than the ratio of the desired bit rate to the baud of the transmitted signal. If the total loading Btot is just equal to the ratio; no optimization is attempted, and process 300 is done in step 315. If total loading Btot is greater than the ratio, decision step determines whether bit loading is to be changed for power efficiency optimization, bandwidth utilization optimization, or no optimization is desire. The process of reducing the bit loading of a subchannel is primarily for satisfying the bitrate requirements of a communication system. However, one can selectively remove or ease the bit loading on particular channels or, if possible zero out the loading, on channels that have low loads, which tend to be towards the end of the spectrum (higher frequencies). In both cases, reduction of bit loading results in power savings, and the latter case achieves selective frequency shaping.

To optimize bandwidth utilization, a step 332 selects a sub-channel k to be removed from the set of sub-channels carrying received data. The selected sub-channel k can be the channel having the lowest bit loading or a channel removed to improve frequency separations between utilized sub-channels. Step 334 reduces total loading Btot by the sub-channels current loading, sets bit loading b(k) for the selected sub-channel to zero, and sets difference bd(k) for the sub-channel to 0 so that subsequent processing change bit loading b(k) to a non-zero value. After sub-channel k has been released, the process 300 returns to step 250 (Fig. 2) to determine whether total loading Btot still provides the desired bit rate. The process continues from step 250 as described above.

If power optimization is desired, process 300 branches from step 320 to step 342 instead of step 332. Step 342 initializes a count for the optimization including steps 344, 346, 348, 350, 352, and 354. After the count is ready, step 344 determines whether the count is greater than or equal to the number of differences bd(i) that are less than zero. If the count is equal to (or greater than) the number of negative differences bd(i), process 300 is done. Otherwise, step 346 selects a sub-channel m that has the minimum (i.e., most negative) difference bd(m). Step 348 reduces gain g(m) of selected sub-channel m as indicated in Equation 10 in order to comply with the requirements of the communication system (i.e., BER=10e-7, noise margin=6db,.....), where gain g(m) is in dB.

$$\text{Equation 10: } g(m) = g(m) + 10 \log_{10} (2^{-1-bd(m)})$$

Step 350 then reduces the loading b(m) of selected sub-channel m to satisfy the bit rate requirements (bit loading) of the communication system.. Step 350 also reduces total loading Btot by one and sets difference bd(m) to zero to prevent further adjustment of loading b(m). A decision step 353 determines whether total loading Btot still provides more than the desired bit rate. If not, process 300 is done. If total loading Btot still provides more than the desired bit rate, step 354 increments the count and process 300 branches back to step 344 to attempt to reduce the power and loading of another sub-channel. Process 300 reduces gain for only sub-channels m that have negative differences bd(m), i.e., sub-channels where the target bit loading bt(m) was rounded up. Accordingly, the reductions in loading have the most effect for reducing error rates. Further, the reduction in gains g(m) reduces the require transmit power.

Although the invention has been described with reference to particular embodiments, the description is only an example of the invention's application and should not be taken as a limitation. For example, the above-described order in which adjustments are made to the loadings and gains of sub-channels is based on the size of the differences. However, the order of such adjustments can be made based on other factors such as the carrier frequencies of the sub-channels or even in a random order among the sub-channels having positive differences bd(i). As another example, the description gives specific equations for quantities such as the adjustments of gains are given, but other formulations or adjustments can be made to the same or similar effect. Further, although a specific order of process steps has been described, many of the steps can be performed in different orders or in parallel with other steps. Various other adaptations and combinations of features of the embodiments disclosed are within the scope of the invention as defined by the following claims.

## Claims

**1.** A process for determining bit loadings for subchannels of a communication signal, comprising:

measuring noise in the communication signal;
determining target loadings for each sub-channel, wherein the target loading for a sub-channel can be a non-integer value and provides an error probability equal to a target level when the noise is as measure;
rounding the target loadings to generate proposed loadings for the sub-channels, wherein each proposed loading is an integer;
determining, for each sub-channel, a differences between the target and proposed loadings for the sub-channel;
selecting a sub-channel according to the difference for the selected sub-channel; and
changing the proposed loading for the selected sub-channel by 1 to arrive at the bit loading for the selected sub-channel.

2. The process of claim 1, wherein selecting a sub-channel comprises selecting the sub-channel for which the difference is positive.

3. The process of claim 1 or claim 2, wherein changing the proposed loading comprises increasing the proposed loading by 1.

4. The process of any one of the preceding claims, further comprising increasing a gain for the selected sub-channel.

5. The process of any one of the preceding claims, further comprising:

   setting the difference for the sub-channel to a non-positive value; and
   repeating the selecting, changing, and increasing steps one or more times.

6. The process of claim 5, wherein each selecting further comprises selecting the sub-channel that then has the largest difference.

7. The process of claim 1, wherein selecting a sub-channel comprises selecting the sub-channel for which the difference is negative.

8. The process of claim 7, wherein changing the proposed loading comprises decreasing the proposed loading by 1.

9. The process of claim 7 or 8, further comprising decreasing a gain for the selected sub-channel.

10. The process of claim 7, 8 or 9, further comprising:

    setting the difference for the sub-channel to a non-negative value; and
    repeating the selecting, changing, and decreasing steps on or more times.

11. The process of claim 10, wherein each selecting further comprises selecting the sub-channel that then has the most-negative difference.

12. The process of any one of the preceding claims, further comprising adjusting a gain for the selected sub-channel to compensate for changing the proposed loading.

13. The process of any one of the preceding claims, wherein measuring noise comprises measuring noise in each sub-channel.

14. An ADSL transceiver that performs the process of any one of the preceding claims.

15. A process for determining bit loading for sub-channels of a communication signal, comprising:

    measuring noise in the communication signal;
    using the measured noises in determining proposed loadings of the sub-channels from the measured noise in the sub-channels, wherein each proposed loading indicates an integer number of bits per symbol transmitted on a sub-channel;
    setting gains for the sub-channels according to the proposed loadings and the measured noise;
    determining whether the proposed loadings provide a desired data rate for the communication signal;
    increasing the proposed loadings for one or more selected sub-channels in response to the proposed loadings failing to provide the desired data rate; and
    increasing gains for the selected sub-channels to reduces probability of error with the increase loading and the measured noise.

16. The process of claim 15, further comprising:

    determining for each sub-channel, a difference between a target loading and the proposed loading for the sub-channel; and
    rounding each target loading to the nearest integer to obtain the proposed loading for the sub-channel associated with the target loading, wherein:

the target loading can be a non-integer value;
the target loading provides an error probability equal to a threshold level when the noise is as measured; and
for each of the one or more selected sub-channel, a difference between the target and proposed loadings is greater than zero.

**17.** The process of claim 15 or 16, further comprising:

determining whether the proposed loadings provide a data rate greater than the desired data rate for the communication;
decreasing the proposed loading for one or more selected sub-channels in response to the loadings providing a data rate greater than the desired data rate; and
decreasing gains for the selected sub-channels for which the proposed loadings are decreased, whereby power efficiency of the communication signal improves.

**18.** The process of claim 17, further comprising:

determining for each sub-channel, a difference between a target loading and the proposed loading for the sub-channel; and
rounding each target loading to the nearest integer to obtain the proposed loading for the sub-channel associated with the target loading, wherein:
the target loading can be a non-integer value;
the target loading provides an error probability equal to a threshold level when the noise is as measured; and
for each of the one or more selected sub-channel for which the proposed loading is decreased, a difference between the target and proposed loadings is less than zero.

FIG. 1

200

```
┌─────────────────────────────────┐
│  DETERMINE A TARGET LOADINGS    │  210
│  bt(i) = log₂(1+SNRi/Γ)         │
└─────────────────────────────────┘
```

$$bt(i) = \log_2(1+SNRi/\Gamma)$$

210

```
┌─────────────────────────────────┐
│  DETERMINE LOADINGS b(i), TOTAL │  220
│ LOADING Btot, AND DIFFERENCES bd(i) │
│       b(i) = round(bt(i))       │
│         Btot = Σ b(i)           │
│       bd(i) = bt(i) - b(i)      │
└─────────────────────────────────┘
```

DETERMINE LOADINGS b(i), TOTAL LOADING Btot, AND DIFFERENCES bd(i)
$$b(i) = \text{round}(bt(i))$$
$$Btot = \Sigma\, b(i)$$
$$bd(i) = bt(i) - b(i)$$

220

DETERMINE GAINS g(i)
$$g(i) = (x+\gamma - SNR(i)) + 10\log_{10}(2^{b(i)}-1)$$

230

INITIALIZE COUNT

240

DOES Btot PROVIDE THE DESIRED DATA RATE?

250

YES → OPTIMIZE LOADINGS AND GAINS

300

NO

IS THE NUMBER Nd OF POSITIVE bd(i) LESS THAN THE COUNT?

260

YES → THE PROCESS CANNOT ACHIEVE THE DESIRED DATA RATE FOR THE GIVEN SNR

280

NO

INCREMENT COUNT

272

SELECT THE SUB CHANNEL j THAT HAS MAXIMUM DIFFERENCE bd(j) AND SET DIFFERENCE bd(j) TO 0

274

ADJUST SUB-CHANNEL LOADING b(j) AND TOTAL LOADING Btot
$$b(j) = b(j) + 1 \text{ AND } Btot = Btot + 1$$

276

ADJUST THE GAIN g(j) FOR THE SELECTED SUB-CHANNEL
$$g(j) = g(j) + 10\log 10\,(2^{1-bd(j)})$$

278

FIG. 2

FROM STEP 250

300

**310** IS Btot > (BIT RATE/BAUD RATE)? — NO → DONE

**315**

YES

**320** OPTIMIZE POWER EFFICIENCY OR BANDWIDTH USE?

POWER

BANDWIDTH

INITIALIZE COUNT

**342**

**332** SELECT SUB-CHANNEL k

IS THE COUNT > or = THE NUMBER OF bd(i) < 0

**344**

SELECT THE SUB CHANNEL m THAT HAS MINIMUM DIFFERENCE bd(m) AND SET DIFFERENCE bd(m) TO 0

**346**

**334** SET Btot = Btot - b(k) b(k) = 0 bd(k) = 0

ADJUST THE GAIN g(m) FOR THE SELECTED SUB-CHANNEL $g(m) = g(m) + 10 \log 10 \ (2^{-1-bd(m)})$

**348**

**336** GO TO STEP 250

SET Btot = Btot - 1 b(m) = b(m) - 1 bd(m) = 0

**350**

**352** IS Btot > BIT RATE/BAUD RATE? — NO → DONE

NO

**360**

YES

INCREMENT COUNT

**354**

**FIG. 3**